# EUROPEAN PATENT SPECIFICATION

(11) **EP 1 986 192 B1**
(45) Date of publication and mention of the grant of the patent: **17.02.2010**
(21) Application number: 08155164.0
(22) Date of filing: 25.04.2008
(51) Int. Cl.: G11B 20/10, G11B 20/12

(54) **Recording apparatus, recording method, and program**
Aufzeichnungvorrichtung und Aufzeichnungsverfahren und Programm
Appareil, procédé et programme d'enregistrement

(30) Priority: 27.04.2007 JP 2007119951
(43) Date of publication of application: 29.10.2008
(73) Proprietor: Sony Corporation, Tokyo 108-0075 (JP)
(72) Inventor: Morinaga, Takeo, Tokyo 108-0075 (JP); Hayashi, Morihiko, Tokyo 108-0075 (JP); Sato, Masahiko, Tokyo 108-0075 (JP)
(74) Representative: Körber, Martin Hans

(56) References cited:
- EP-A- 1 746 512
- WO-A-2006/025322
- US-A1- 2003 043 260
- US-A1- 2005 058 428
- US-B1- 7 197 234

## Description

### BACKGROUND OF THE INVENTION

### 1. Field of the Invention

The present invention relates to a recording apparatus, a recording method, and a program, particularly to a recording apparatus, a recording method, and a program, which are suitable for use in the case of recording a content sent from another device.

### 2. Description of the Related Art

Prior-art WO2006025322 A relates to a recording apparatus for copying a digital stream recorded on a first recording medium using a code format compatible with the first recording medium to a second recording medium after the digital stream has been converted to a code format compatible with the second recording medium.

Prior art US7197234 A1 relates to a communication between a server and a client. When information pass without errors a success message is sent to each participating member device.

Prior-art US2005058428 A1 relates to an image recording apparatus having a disk. The disk has a buffer part for temporarily storing data and a permanent part for storing the data permanently.

Heretofore, in the case in which a content is transferred between devices, it is generally performed that in the device on the reception side, a signal notifying that the reception of the content is completed (hereinafter, also referred to as a complete signal) is sent to the device on the sending side at the time when the received content has been preserved, that is, at the time when the recording of the content is completed on a recording medium of the transfer destination, (for example, see Patent Reference 1 (JP-A-2006-113650)). Then, the device on the sending side ends the content transfer process with the reception of the complete signal from the device on the reception side.

For example, the recording medium of the transfer destination, that is, the recording medium on which the received content is to be recorded in the device on the reception side is specified by a user in the device on the reception side, or specified from the device on the sending side. For example, in the case in which a recording medium to which the standardized format is defined like a BD (Blu-ray Disc) is specified as a recording medium of the transfer destination and the format of the received content is different from the format of the specified recording medium, it is necessary to perform a process such as transcoding in the device on the reception side. Then, in order to increase the transfer rate of a content between the devices, such a recording medium having higher speed than that of the recording medium of the transfer destination may be used as an intermediate buffer in the device on the reception side (for example, a HDD (Hard Disc Drive)). In other words, such a scheme is sometimes performed that after the received content is temporarily stored on the intermediate buffer, the stored content is subjected to the transcoding process, and finally the content is recorded on the recording medium of the transfer destination. In this case, after the content is recorded on the recording medium of the transfer destination, a complete signal is sent from the device on the reception side to the device on the sending side.

### SUMMARY OF THE INVENTION

However, in this case, it is necessary for the device on the sending side to maintain the active state of the content transmission process on standby until the content stored on the intermediate buffer is finally recorded on the recording medium of the transfer destination in the device on the reception side. During this standby, it is necessary for the device on the sending side to reserve the sources necessary for the content transmission process, for example, the processing performance of a processor, memory areas, a communication band on communication paths with the device on the reception side, and so on, which results in decreased processing performance.

It is desirable to shorten the standby time of a device on the sending side in the case in which a content is transferred between devices.

A recording apparatus according to an embodiment of the invention is a recording apparatus that can record a content on a first recording part, and on a second recording part taking longer time to record a content than the first recording part does, the recording apparatus including: a recording control means for controlling recording of a transferred content such a way that when the transferred content that is a content sent from another device is recorded on the second recording part, the transferred content is recorded on the first recording part prior to the second recording part and the transferred content recorded on the first recording part is recorded on the second recording part; and a notifying unit for notifying the another device that reception of the transferred content is completed at a time when the recording of the transferred content on the first recording part is completed before the recording of the transferred content on the second recording part is completed.

The recording apparatus according to the embodiment of the invention may further include: an encrypting means for using information unique to the second recording part to encrypt a content, wherein the recording control means performs control in such a way that information unique to the second recording part is used to encrypt the transferred content for recording the transferred content on the first recording part.

In the recording apparatus according to the embodiment of the invention, the encrypting means may encrypt a content in accordance with a system to which the second recording part conforms.

The recording part is typically a recording medium.

A recording method or a program according to an embodiment of the invention is a recording method of a recording apparatus that can record a content on a first recording medium, and on a second recording medium taking longer time to record a content than the first recording medium does, or a program that allows a computer to perform a process, the computer of a recording apparatus that can record a content on a first recording medium, and on a second recording medium taking longer time to record a content than the first recording medium does, the method and the program including the steps of: controlling recording of a transferred content such a way that when the transferred content that is a content sent from another device is recorded on the second recording medium, the transferred content is recorded on the first recording medium prior to the second recording medium and the transferred content recorded on the first recording medium is recorded on the second recording medium; and notifying the another device that reception of the transferred content is completed at a time when the recording of the transferred content on the first recording medium is completed before the recording of the transferred content on the second recording medium is completed.

According to the embodiment of the invention, in a recording apparatus that can record a content on a first recording medium, and on a second recording medium taking longer time to record a content than the first recording medium does, the recording of a transferred content is controlled in such a way that when the transferred content that is a content sent from another device is recorded on the second recording medium, the transferred content is recorded on the first recording medium prior to the second recording medium and the transferred content recorded on the first recording medium is recorded on the second recording medium, and the another device is notified that reception of the transferred content is completed at a time when the recording of the transferred content on the first recording medium is completed before the recording of the transferred content on the second recording medium is completed.

According to the embodiment of the invention, in the case in which a content is transferred between devices, the standby time of the device on the sending side can be shortened.

### BRIEF DESCRIPTION OF THE DRAWINGS

Fig. 1 shows a block diagram depicting an embodiment of a recording and reproducing apparatus to which an embodiment of the invention is adapted;
Fig. 2 shows a block diagram depicting an exemplary configuration of a part of a function implemented by executing a control program by a CPU of the recording and reproducing apparatus;
Fig. 3 shows a flow chart illustrative of a content transmission process performed by a recording and reproducing apparatus on the sending side;
Fig. 4 shows a flow chart illustrative of a first embodiment of a content receiving process performed by the recording and reproducing apparatus on the reception side;
Fig. 5 shows a sequence diagram depicting a flow of signals and a content in a content transfer process;
Fig. 6 shows a flow chart illustrative of a second embodiment of the content receiving process performed by the recording and reproducing apparatus on the reception side; and
Fig. 7 shows a flow chart illustrative of a third embodiment of the content receiving process performed by the recording and reproducing apparatus on the reception side.

### DETAILED DESCRIPTION OF THE INVENTION

Hereinafter, an embodiment of the invention will be described. The following is examples of the correspondence between configuration requirements for the invention and the embodiments of the specification or the drawings. This is described for confirming that the embodiments supporting the invention are described in the specification or the drawings. Therefore, even though there is an embodiment that is described in the specification or the drawings but is not described herein as an embodiment corresponding to configuration requirements for the invention, it does not mean that the embodiment does not correspond to those configuration requirements. Contrary to this, even though an embodiment is described herein as an embodiment corresponding to configuration requirements, it does not mean that the embodiment does not correspond to configuration requirements other than those configuration requirements.

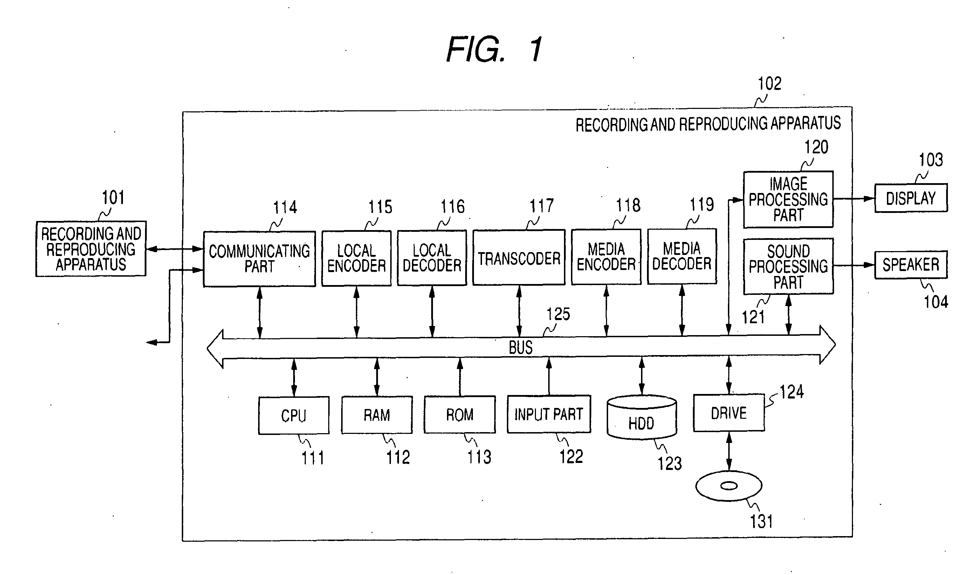

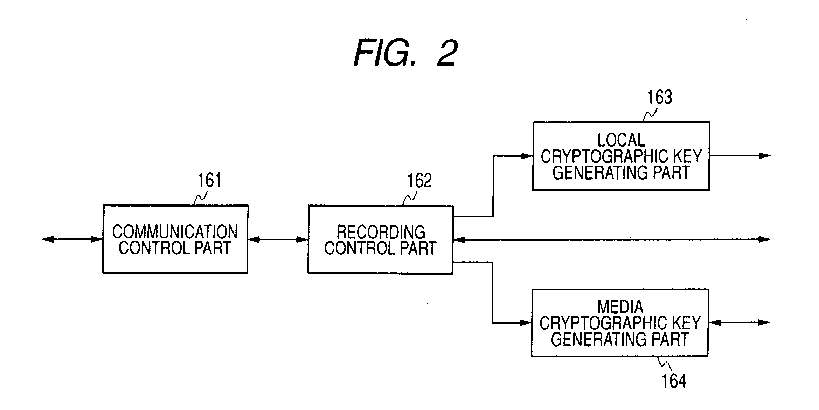

A recording apparatus (for example, a recording and reproducing apparatus 102 shown in Fig. 1) according to an embodiment of the invention is a recording apparatus that can record a content on a first recording medium (for example, a HDD 123 shown in Fig. 1), and on a second recording medium (for example, a recording medium 131 shown in Fig. 1) taking longer time to record a content than the first recording medium does, the recording apparatus including: a recording control means (for example, a recording control part 162 shown in Fig. 2) for controlling recording of a transferred content such a way that when the transferred content that is a content sent from another device (for example, a recording and reproducing apparatus 101 shown in Fig. 1) is recorded on the second recording medium, the transferred content is recorded on the first recording medium prior to the second recording medium and the transferred content recorded on the first recording medium is recorded on the second recording medium; and a notifying means (for example, a communication control part 161 shown in Fig. 2) for notifying the another device that reception of the transferred content is completed at a time when the recording of the transferred content on the first recording medium is completed before the recording of the transferred content on the second recording medium is completed.

The recording apparatus according to the embodiment of the invention may further includes: an encrypting means (for example, a local encoder 115 or a media encoder 118 shown in Fig. 1) for using information unique to the second recording medium to encrypt a content, wherein the recording control means performs control in such a way that information unique to the second recording medium is used to encrypt the transferred content for recording the transferred content on the first recording medium.

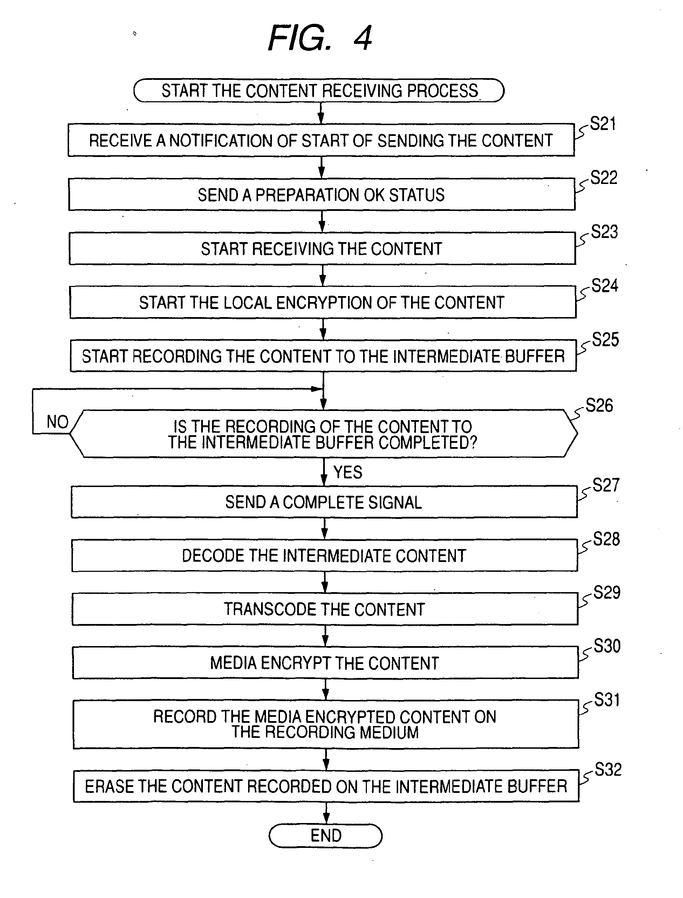

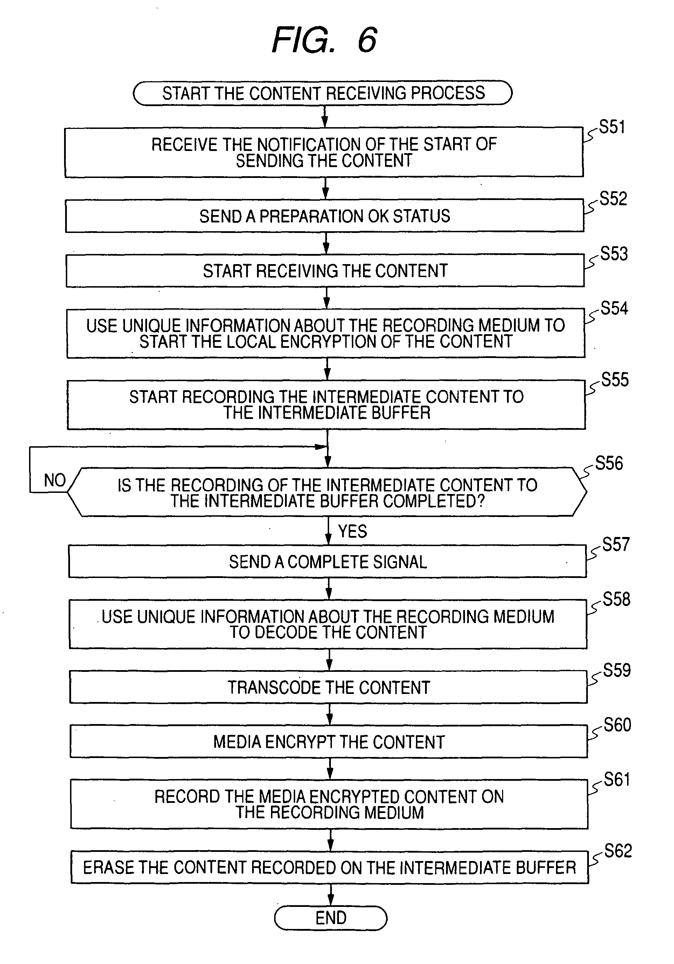

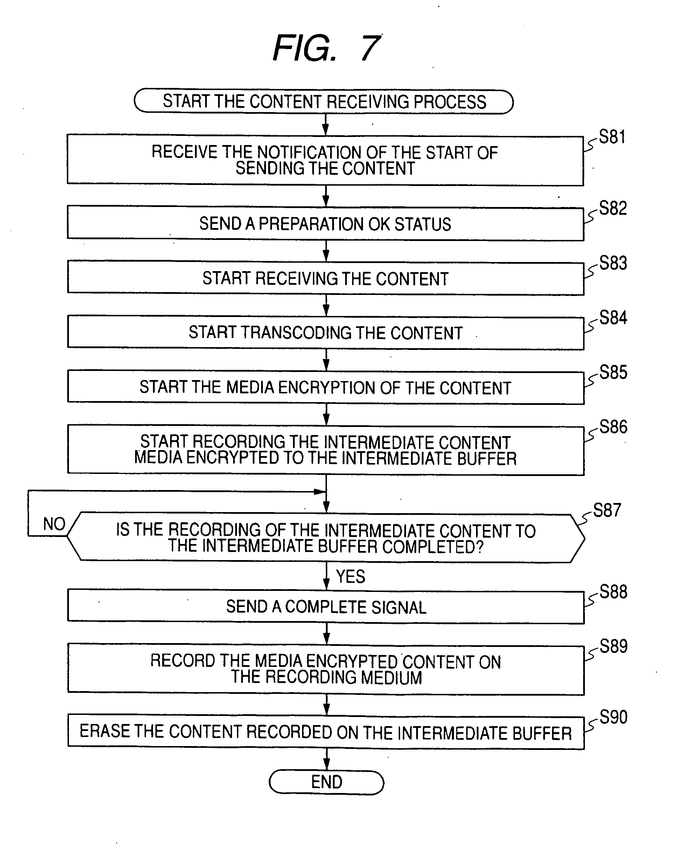

A recording method or a program according to an embodiment of the invention is a recording method of a recording apparatus (for example, the recording and reproducing apparatus 102 shown in Fig. 1) that can record a content on a first recording medium (for example, the HDD 123 shown in Fig. 1), and on a second recording medium (for example, the recording medium 131 shown in Fig. 1) taking longer time to record a content than the first recording medium does, or a program that allows a computer to perform a process, the computer of a recording apparatus (for example, the recording and reproducing apparatus 102 shown in Fig. 1) that can record a content on a first recording medium (for example, the HDD 123 shown in Fig. 1), and on a second recording medium (for example, the recording medium 131 shown in Fig. 1) taking longer time to record a content than the first recording medium does, the method and the program including the steps of: controlling recording of a transferred content such a way that when the transferred content that is a content sent from another device (for example, a recording and reproducing apparatus 101 shown in Fig. 1) is recorded on the second recording medium, the transferred content is recorded on the first recording medium prior to the second recording medium and the transferred content recorded on the first recording medium is recorded on the second recording medium (for example, Steps S25 and S31 shown in Fig. 4, Steps S55 and S61 shown in Fig. 6, or Steps S86 and S89 shown in Fig. 7) ; and notifying the another device that reception of the transferred content is completed at a time when the recording of the transferred content on the first recording medium is completed before the recording of the transferred content on the second recording medium is completed (for example, Step S27 shown in Fig. 4, Step S57 shown in Fig. 6, or Step S88 shown in Fig. 7).

Hereinafter, embodiments to which an embodiment of the invention is adapted will be described with reference to the drawings.

Fig. 1 shows a block diagram depicting an embodiment of a recording and reproducing apparatus 102 to which an embodiment of the invention is adapted. The recording and reproducing apparatus 102 shown in Fig. 1 records a content transferred from another recording and reproducing apparatus 101 configured of a PVR (Personal Video Recorder) on a HDD 123 or a recording medium 131. In addition, the recording and reproducing apparatus 102 reproduces a content recorded on the HDD 123 or the recording medium 131 to allow a display 103 to display video contained in the content thereon for outputting sounds contained in the content from a speaker 104.

The recording and reproducing apparatus 101 is configured to include a CPU (Central Processing Unit) 111, a RAM (Random Access Memory) 112, a ROM (Read Only Memory) 113, a communicating part 114, a local encoder 115, a local decoder 116, a transcoder 117, a media encoder 118, a media decoder 119, an image processing part 120, a sound processing part 121, an input part 122, a HDD (Hard Disc Drive) 123, and a drive 124. The CPU 111, the RAM 112, the ROM 113, the communicating part 114, the local encoder 115, the local decoder 116, the transcoder 117, the media encoder 118, the media decoder 119, the image processing part 120, the sound processing part 121, the input part 122, the HDD 123, and the drive 124 are connected to one another through a bus 125.

The CPU 111 acquires an instruction for processing inputted by a user with the input part 122 through the bus 125, and executes various processes in accordance with a program stored in the ROM 113, or a program loaded from the HDD 123 to the RAM 112.

The RAM 112 stores therein a program used in execution by the CPU 111, and stores therein parameters and data properly changed in the execution.

The ROM 113 stores therein basically fixed data for programs used by the CPU 111 and computing parameters.

The communicating part 114 is configured of a network interface conformed to the standards such as the USB (Universal Serial Bus), and IEEE (Institute of Electrical and Electronic Engineers) 1394 standards, and communicates with an external device such as the recording and reproducing apparatus 101 in conformance to a predetermined standard (for example, DTCP (Digital Transmission Content Protection)). The communicating part 114 supplies a content received from another device to the individual blocks of the recording and reproducing apparatus 102 through the bus 125, or acquires a content to be sent to another device from the individual blocks of the recording and reproducing apparatus 102.

The local encoder 115 encrypts a content (hereinafter, also referred to as local encryption) in accordance with a system different from the system to which the recording medium 131 conforms (for example, AES (Advanced Encryption Standard) ) . The local encoder 115 records the content local encrypted on the HDD 123 as necessary.

The local decoder 116 decodes the content local encrypted. In addition, the local decoder 116 separates the decoded content into video data and audio data as necessary, and supplies the video data to the image processing part 120 and the audio data to the sound processing part 121 through the bus 125.

The transcoder 117 transcodes a content in the format different from the format to which the recording medium 131 conforms into the format to which the recording medium 131 conforms.

The media encoder 118 encrypts a content (hereinafter, also referred to as media encryption) in accordance with the system to which the recording medium 131 conforms (for example, AACS (Advanced Access Content System)). The media encoder 118 records the content media encrypted on the HDD 123 or the recording medium 131 as necessary.

The media decoder 119 decodes the content media encrypted. In addition, the media decoder 119 separates the decoded content into video data and audio data as necessary, and supplies the video data to the image processing part 120, and the audio data to the sound processing part 121 through the bus 125.

For example, the image processing part 120 is configured of a processor such as a CPU or a DSP (Digital Signal Processor), and allows the display 103 to display a predetermined image (a screen) thereon based on the video data supplied from the local decoder 116 or the media decoder 119.

The sound processing part 121 converts the audio data supplied from the local decoder 116 or the media decoder 119 into analog sound signals, and outputs the converted sound signals to the speaker 104 for outputting sounds from the speaker 104.

For example, the input part 122 is configured of a button, a switch, a keyboard or a mouse, and is manipulated at the time when a user enters various instructions to the recording and reproducing apparatus 102.

The HDD 123 is a recording medium having a recording speed higher than that of the recording medium 131, and records thereon various contents and programs run by the CPU 111.

For example, the drive 124 on which the recording medium 131 formed of such a disk as a BD (Blu-ray Disc), a magnetic disk, an optical disk, a magneto-optical disk, or a semiconductor memory is properly mounted, and records various contents and programs on the recording medium 131, or reads various contents and programs recorded on the recording medium 131.

Fig. 2 shows a block diagram depicting an exemplary configuration of a part of the function implemented by executing a predetermined control program by the CPU 111. The CPU 111 executes a predetermined control program to implement a function including a communication control part 161, a recording control part 162, a local cryptographic key generating part 163, and a media cryptographic key generating part 164.

The communication control part 161 controls the communicating part 114 through the bus 125 to communicate an external device such as the recording and reproducing apparatus 101 connected to the recording and reproducing apparatus 102 through the communicating part 114. The communication control part 161 supplies a signal received from the external device to the recording control part 162 as necessary.

The recording control part 162 controls the local encoder 115, the local decoder 116, the transcoder 117, the media encoder 118, the media decoder 119, the HDD 123, and the drive 124 through the bus 125 to control processing of the content such as encryption, decoding, transcoding, and recording of the content. In addition, the recording control part 162 notifies the logs of the receiving process of the content sent from the external device to the communication control part 161 as necessary. Moreover, in the case in which the local encryption of the content is performed, the recording control part 162 instructs the local cryptographic key generating part 163 to generate a cryptographic key (hereinafter, referred to as a local cryptographic key) for use in the local encryption of the content. In addition, in the case in which the media encryption of the content is performed, the recording control part 162 instructs the media cryptographic key generating part 164 to generate a cryptographic key (hereinafter, referred to as a media cryptographic key) for use in the media encryption of the content.

The local cryptographic key generating part 163 generates a local cryptographic key based on the instruction from the recording control part 162, and supplies the generated local cryptographic key to the local encoder 115 through the bus 125. In addition, the local cryptographic key generating part 163 reads information unique to the recording medium 131 (hereinafter, also referred to as unique information) through the drive 124 and the bus 125 as necessary, and uses the read unique information to generate a local cryptographic key.

The media cryptographic key generating part 164 reads unique information about the recording medium 131 through the drive 124 and the bus 125 based on the instruction from the recording control part 162, and uses the read unique information to generate a media cryptographic key. The media cryptographic key generating part 164 supplies the generated media cryptographic key to the media encoder 118 through the bus 125.

In addition, the unique information about the recording medium 131 is varied for each of recording media, and is unchanged information. For example, the fabrication number and media ID of the recording medium 131 are used. In addition, in the case in which the recording medium 131 conforms to AACS, a Binding Nonce allocated to each of recording media, for example, can be used as unique information.

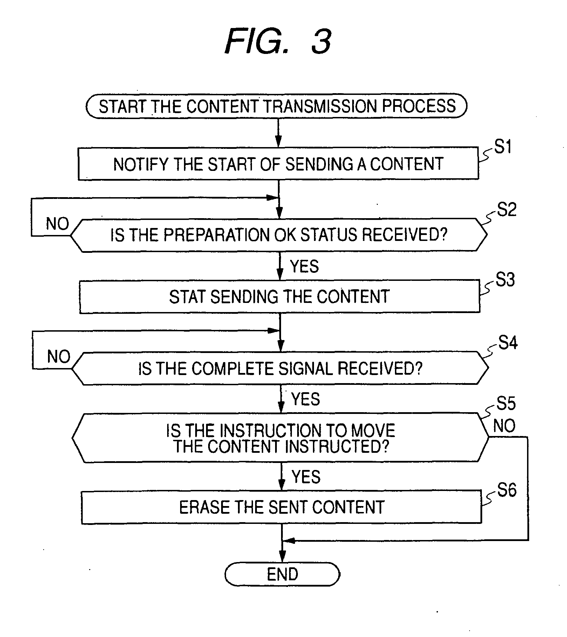

Next, a process in the case in which a content is transferred from the recording and reproducing apparatus 101 to the recording and reproducing apparatus 102 will be described with reference to Figs. 3 to 7.

First, a content transmission process executed by the recording and reproducing apparatus 101 will be described with reference to a flow chart shown in Fig. 3. In addition, for example, this process is started at the time when a user enters an instruction to copy or move a content recorded on the recording and reproducing apparatus 101 to the recording and reproducing apparatus 102 through an input part of the recording and reproducing apparatus 101, not shown. Moreover, here, to copy the content is a process in which a content is transferred to the recording and reproducing apparatus 102 of the transfer destination as the content is left in the recording and reproducing apparatus 101 of the transfer source. To move the content is a process in which a content is transferred to the recording and reproducing apparatus 102 of the transfer destination as the content is not left in the recording and reproducing apparatus 101 of the transfer source. In addition, when the user makes an instruction to copy or move the content, the user specifies any one of the HDD 123 and the recording medium 131 for the recording medium on which the transferred content is to be recorded in the recording and reproducing apparatus 102 (hereinafter, also referred to as a content transfer destination). Furthermore, hereinafter, a process will be described in the case which the recording medium 131 is specified as a content transfer destination.

In Step S1, the recording and reproducing apparatus 101 notifies the start of sending a content. In other words, the recording and reproducing apparatus 101 sends a content transmission notification that is a signal signaling the start of sending a content to the recording and reproducing apparatus 102. In addition, for example, the content transmission notification includes information such as the descriptions and capacity of the content and a content transfer destination.

The recording and reproducing apparatus 102 receives the content transmission notification in Step S21 shown in Fig. 4, described later, and in Step S22, the apparatus 102 prepares for receiving the content, and then sends a preparation OK status that is a signal indicating that preparation for receiving the content is ready.

In Step S2, it is determined whether the preparation OK status is received. The recording and reproducing apparatus 101 repeatedly executes the determination process in Step S2 until the apparatus 101 receives the preparation OK status sent from the recording and reproducing apparatus 102. If the apparatus 101 determines that the preparation OK status sent from the recording and reproducing apparatus 102 is received, the process goes to Step S3.

In Step S3, the recording and reproducing apparatus 101 starts sending the content to the recording and reproducing apparatus 102.

The recording and reproducing apparatus 102 starts receiving the content in Step S23 shown in Fig. 4, described later, and in Step S27, the apparatus 102 sends a complete signal that is a signal notifying that the reception of the content is completed at a point in time when it is finished to record the content on the HDD 123 used for the intermediate buffer.

In Step S4, the recording and reproducing apparatus 101 determines whether the complete signal is received. The recording and reproducing apparatus 101 repeatedly executes the determination process in Step S4 until the apparatus 101 receives the complete signal sent from the recording and reproducing apparatus 102. If the apparatus 101 determines that the complete signal sent from the recording and reproducing apparatus 102 is received, the process goes to Step S5.

In Step S5, the recording and reproducing apparatus 101 determines whether the instruction to MOVE the content is instructed. If the recording and reproducing apparatus 101 determines that the instruction to MOVE the content is instructed by the user, the process goes to Step S6.

In Step S6, the recording and reproducing apparatus 101 erases the sent content, and the content transmission process is ended.

On the other hand, in Step S5, if the apparatus 101 determines that the user makes the instruction to COPY the content, the process in Step S6 is skipped, the sent content is not erased, and then the content transmission process is ended.

Next, a first embodiment of a content receiving process executed by the recording and reproducing apparatus 102 corresponding to the content transmission process shown in Fig. 3 executed by the recording and reproducing apparatus 101 will be described with reference to a flow chart shown in Fig. 4.

In Step S21, the communication control part 161 receives a notification of start of sending the content. In other words, the communication control part 161 receives the content transmission notification sent from the recording and reproducing apparatus 101 through the communicating part 114 and the bus 125.

In Step S22, the communication control part 161 sends a preparation OK status. More specifically, the communication control part 161 supplies the content transmission notification to the recording control part 162. The individual blocks of the recording and reproducing apparatus 102 prepare for receiving the content under control done by the recording control part 162. At the time when the recording control part 162 finishes preparing for receiving the content, the recording control part 162 notifies the communication control part 161 that the preparation of receiving the content is completed. The communication control part 161 sends the preparation OK status to the recording and reproducing apparatus 101 through the bus 125 and the communicating part 114.

In Step S23, the communicating part 114 starts receiving the content sent from the recording and reproducing apparatus 101 under control done by the communication control part 161.

In Step S24, the local encoder 115 starts the local encryption of the content. More specifically, the recording control part 162 instructs the local cryptographic key generating part 163 to generate a local cryptographic key, and the local cryptographic key generating part 163 generates a local cryptographic key. In addition, the local cryptographic key generated here is generated with no use of unique information about the recording medium 131, and this key is a key independent of the recording medium 131. The local cryptographic key generating part 163 supplies the generated local cryptographic key to the local encoder 115 through the bus 125. In addition, the local cryptographic key generating part 163 records the generated local cryptographic key in a non-volatile memory, not shown, different from the RAM 112 or the HDD 123 through the bus 125. Moreover, hereinafter, the discussion will proceed as the local cryptographic key is supposed to be stored in the RAM 112.

In addition, the communicating part 114 starts the supply of the received content to the local encoder 115 through the bus 125 under control done by the recording control part 162. The local encoder 115 uses the acquired local cryptographic key to start the local encryption of the received content under control done by the recording control part 162.

In Step S25, the recording and reproducing apparatus 102 starts recording the content on the intermediate buffer. More specifically, under control done by the recording control part 162, the local encoder 115 starts the supply of the content local encrypted (hereinafter, also referred to as an intermediate content) to the HDD 123 used for the intermediate buffer through the bus 125, and the HDD 123 starts recording of the intermediate content being supplied.

In addition, since the intermediate content is encrypted with the local cryptographic key, for example, even though the HDD 123 is stolen out of the recording and reproducing apparatus 102, or the intermediate content is tapped, it is difficult to decode the intermediate content unless otherwise the local cryptographic key is obtained. Consequently, the piracy of the content can be prevented.

In Step S26, the recording control part 162 determines whether the recording of the content to the intermediate buffer is completed. The process in Step S26 is repeatedly performed until the recording and reproducing apparatus 101 finishes sending the content and the recording control part 162 receives the complete signal notifying that the recording of the intermediate content is completed from the HDD 123 through the bus 125. Then, at the time when the complete signal is received from the HDD 123, the recording control part 162 determines that the recording of the content to the intermediate buffer is completed, and the process goes to Step S27.

In Step S27, the communication control part 161 sends a complete signal. More specifically, the recording control part 162 notifies the communication control part 161 that the recording of the content to the intermediate buffer is completed. The communication control part 161 sends a complete signal that is a signal notifying that the reception of the content is completed, the content being sent from the recording and reproducing apparatus 101 to the recording and reproducing apparatus 101 through the bus 125 and the communicating part 114.

In Step S28, the local decoder 116 decodes the intermediate content. More specifically, the recording control part 162 reads the intermediate content out of the HDD 123 through the bus 125, and supplies the read intermediate content to the local decoder 116. The local decoder 116 reads the local cryptographic key stored in the RAM 112 through the bus 125 under control done by the recording control part 162, and uses the local cryptographic key to decode the intermediate content.

In Step 529, the transcoder 117 transcodes the content. More specifically, under control done by the recording control part 162, the local decoder 116 supplies the decoded content to the transcoder 117, and the transcoder 117 transcodes the acquired content into the format to which the recording medium 131 conforms.

In addition, in the case in which the format of the content sent from the recording and reproducing apparatus 101 is the same as the format to which the recording medium 131 conforms, the process in Step S29 is omitted.

In Step S30, the media encoder 118 media encrypts the content. More specifically, the recording control part 162 instructs the media cryptographic key generating part 164 to generate a media cryptographic key. Under control done by the media cryptographic key generating part 164, the drive 124 reads unique information out of the recording medium 131, and supplies the read unique information to the media cryptographic key generating part 164 through the bus 125. The media cryptographic key generating part 164 uses the acquired unique information to generate the media cryptographic key, and supplies the generated media cryptographic key to the media encoder 118 through the bus 125.

Under control done by the recording control part 162, the transcoder 117 supplies the transcoded content to the media encoder 118 through the bus 125. Under control done by the recording control part 162, the media encoder 118 uses the media cryptographic key to media encrypt the acquired content.

In Step S31, the recording and reproducing apparatus 102 records the content media encrypted on the recording medium 131. More specifically, under control done by the recording control part 162, the media encoder 118 supplies the content media encrypted to the drive 124 through the bus 125, and the drive 124 records the acquired content on the recording medium 131 that is the final transfer destination of the content. At the time when the recording of the content media encrypted to the recording medium 131 is completed, the drive 124 supplies a complete signal indicating that the recording of the content is completed to the recording control part 162 through the bus 125.

In Step S32, the recording control part 162 erases the content recorded on the intermediate buffer, that is, the intermediate content recorded on the HDD 123 is erased, and then the content receiving process is ended.

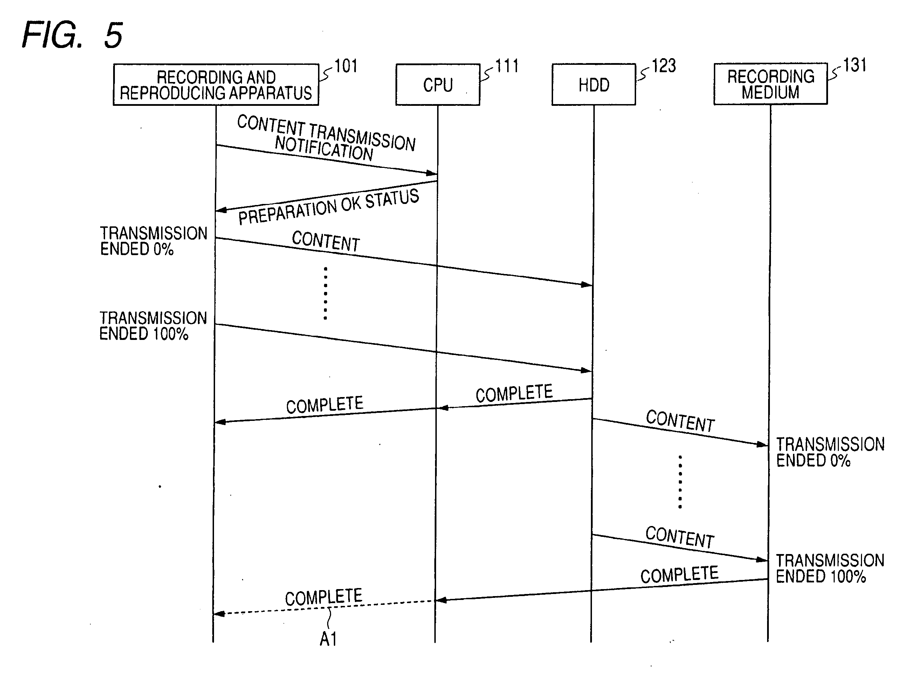

Fig. 5 shows a sequence diagram depicting a flow of the signals and the content in the process described with reference to Figs. 3 and 4.

For example, the case is considered in which a one-hour content encoded at 15 Mbps (bits per second) (hereinafter, referred to as a content A) is transferred from the recording and reproducing apparatus 101 to the recording and reproducing apparatus 102. In this case, since the capacity of the content A is 6750 Mbytes (= 15 Mbps x 3600 seconds ö 8), a time period necessary to record the content A on the HDD 123 with no encryption is 540 seconds (= 6750 Mbytes x 8 ö 100 Mbps), where the average of the recording speed of the HDD 123 in the recording and reproducing apparatus 102 is 100 Mbps.

Therefore, in the process described above, a time period is 540 seconds + α seconds, the time period that the recording and reproducing apparatus 101 sends the content transmission notification to the recording and reproducing apparatus 102, the recording of the content is completed to the HDD 123 that is the intermediate buffer, and the apparatus 101 then receives the complete signal sent from the recording and reproducing apparatus 102. Here, α is a time period including a time necessary to transfer the content between devices and to do the local encryption of the content, and including errors of a recording time period of the content in association with the change in the content capacity due to local encryption.

On the other hand, as indicated by an arrow A1 of a dotted line shown in Fig. 5, the case is considered in which the recording and reproducing apparatus 102 sends the complete signal at a point in time at which the content transfer to the recording medium 131 is finished the same as the case before. Here, a time period necessary to record the content A on the recording medium 131 with no encryption is 1800 seconds (= 6750 Mbytes x 8 ö 30 Mbps), where the average of the recording speed of the recording medium 131 in the recording and reproducing apparatus 102 is 30 Mbps. Therefore, a time period is 540 + α + 1800 + β seconds, the time period that the recording and reproducing apparatus 101 sends the content transmission notification to the recording and reproducing apparatus 102, the recording of the content is completed to the recording medium 131, and the apparatus 101 then receives the complete signal sent from the recording and reproducing apparatus 102. Here, β is a time period including a time necessary for decoding, transcoding, and media encryption of the content, and including errors of a recording time period of the content in association with the change in the content capacity due to media encryption.

In other words, in the case in which the complete signal is sent in accordance with the method before, it is necessary for the recording and reproducing apparatus 101 to wait for 30 minutes or longer (= 1800 + β seconds) until the apparatus 101 receives the complete signal after the recording and reproducing apparatus 102 finishes sending the content to the HDD 123. During this standby, it is necessary for the recording and reproducing apparatus 101 to reserve the sources necessary for the content transmission process, for example, the processing performance of the processor such as the CPU of the recording and reproducing apparatus 101, memory areas, and the communication band in the communication paths with the recording and reproducing apparatus 102, which results in a decrease in the processing performance of the recording and reproducing apparatus 101.

On the other hand, as described above, at the time when the recording of the content is completed to the HDD 123 that is the intermediate buffer, the recording and reproducing apparatus 102 sends the complete signal before the recording of the content is completed to the recording medium 131, whereby the standby time of the recording and reproducing apparatus 101 is shortened, and the processing performance of the recording and reproducing apparatus 101 can be utilized effectively. In addition, even though the content is not recorded on the recording medium of the transfer destination 131, the content is recorded on the intermediate buffer, and thus it is guaranteed that the content is held on the recording and reproducing apparatus 102 side even though the sent content is erased in the recording and reproducing apparatus 101.

Next, a second embodiment of a content receiving process executed by the recording and reproducing apparatus 102 corresponding to the content transmission process shown in Fig. 3 executed by the recording and reproducing apparatus 101 will be described with reference to a flow chart shown in Fig. 6.

As apparent from the comparison of the flow chart depicting shown in Fig. 4 with the flow chart shown in Fig. 6, the second embodiment of the content receiving process is almost similar to the first embodiment, but processes in Steps S54 and S58 are different from the processes in Steps S24 and S28 in the corresponding process steps in the first embodiment.

In other words, in Step S54, the local encoder 115 uses unique information about the recording medium 131 to start the local encryption of the content. More specifically, the recording control part 162 instructs the local cryptographic key generating part 163 to generate a local cryptographic key. Under control done by the local cryptographic key generating part 163, the drive 124 reads unique information out of the recording medium 131, and supplies the read unique information to the local cryptographic key generating part 163 through the bus 125. For example, the local cryptographic key generating part 163 generates a first local cryptographic key, and uses the first local cryptographic key and the unique information about the recording medium 131 to generate a second local cryptographic key. The local cryptographic key generating part 163 supplies the generated second local cryptographic key to the local encoder 115 through the bus 125. In addition, the local cryptographic key generating part 163 stores the first local cryptographic key in the RAM 112, or in a non-volatile memory, not shown, different from the HDD 123 through the bus 125. Moreover, hereinafter, the discussion will proceed as the local cryptographic key is supposed to be stored in the RAM 112.

Under control done by the recording control part 162, the communicating part 114 starts the supply of the content received from the recording and reproducing apparatus 101 to the local encoder 115 through the bus 125. Under control done by the recording control part 162, the local encoder 115 uses the acquired second local cryptographic key to start the local encryption of the recording medium 131.

Then, in Step S55, the recording of the intermediate content to the HDD 123 that is the intermediate buffer is started.

In addition, in Step S58, the local decoder 116 uses the unique information about the recording medium 131 to decode the content local encrypted. More specifically, the recording control part 162 instructs the local cryptographic key generating part 163 to generate a second local cryptographic key. Under control done by the local cryptographic key generating part 163, the drive 124 reads unique information out of the recording medium 131, and supplies the read unique information to the local cryptographic key generating part 163 through the bus 125. In addition, the local cryptographic key generating part 163 reads the first local cryptographic key out of the RAM 112 through the bus 125. The local cryptographic key generating part 163 uses the first local cryptographic key and the unique information about the recording medium 131 to generate a second local cryptographic key, and supplies it to the local decoder 116 through the bus 125.

The recording control part 162 reads the intermediate content out of the HDD 123 through the bus 125, and supplies it to the local decoder 116. Under control done by the recording control part 162, the local decoder 116 uses the second local cryptographic key to decode the intermediate content.

Thus, the intermediate content is bound on the recording medium 131 through the unique information about the recording medium 131, and the intermediate content may not be decoded with any unique information about the recording medium 131. Therefore, for example, even though the HDD 123 is stolen out of the recording and reproducing apparatus 102, or the intermediate content is tapped, or the intermediate content is copied to a recording medium different from the recording medium 131, the intermediate content may not be decoded unless otherwise the unique information about the recording medium 131 is obtained as well as the first local cryptographic key is obtained. Thus, the piracy of the content can be prevented more strongly than the first embodiment.

In addition, it is guaranteed that the transferred content is bound on the recording medium 131 in the recording and reproducing apparatus 102. Thus, for example, from the viewpoint of security, even though to copy or to move the content is authorized only to the recording medium 131 compliant to a reliable cryptographic system, or even in a business model that a content is copied or moved to the recording medium 131 for charging, as described above, in order to increase the content transfer rate between devices, the HDD 123 can be used as the intermediate buffer.

Next, a third embodiment of a content receiving process executed by the recording and reproducing apparatus 102 corresponding to the content transmission process shown in Fig. 3 executed by the recording and reproducing apparatus 101 will be described with reference to a flow chart shown in Fig. 7.

In Steps S81 to S83, the similar processes as Steps S21 to S23 shown in Fig. 4 described above are performed to start receiving the content sent from the recording and reproducing apparatus 101.

In Step S84, the transcoder 117 starts transcoding the content. More specifically, under control done by the recording control part 162, the communicating part 114 starts the supply of the received content to the transcoder 117 through the bus 125. Under control done by the recording control part 162, the transcoder 117 starts transcoding the content being supplied into the format of the content to which the recording medium 131 conforms.

In addition, in the case in which the format of the content sent from the recording and reproducing apparatus 101 is the same as the format to which the recording medium 131 conforms, the process in Step S84 is omitted.

In Step S85, the media encoder 118 starts the media encryption of the content. More specifically, the recording control part 162 instructs the media cryptographic key generating part 164 to generate a media cryptographic key. Under control done by the media cryptographic key generating part 164, the drive 124 reads unique information out of the recording medium 131, and supplies the read unique information to the media cryptographic key generating part 164 through the bus 125. The media cryptographic key generating part 164 uses the acquired unique information to generate a media cryptographic key, and supplies the generated media cryptographic key to the media encoder 118 through the bus 125.

Under control done by the recording control part 162, the transcoder 117 starts the supply of the transcoded content to the media encoder 118 through the bus 125. The media encoder 118 uses the media cryptographic key to start the media encryption of the content being supplied.

In Step S86, the recording and reproducing apparatus 102 starts recording the content media encrypted to the intermediate buffer. More specifically, under control done by the recording control part 162, the media encoder 118 starts the supply of the content media encrypted to the HDD 123 used for the intermediate buffer through the bus 125, and the HDD 123 starts recording the content being supplied.

In Step S87, the recording control part 162 determines whether recording of the content media encrypted to the intermediate buffer is completed. The process in Step S87 is repeatedly performed until the sending of the content from the recording and reproducing apparatus 101 is finished and the recording control part 162 receives a complete signal notifying that the recording of the content media encrypted is completed from the HDD 123 through the bus 125. Then, at the time when the complete signal is received from the HDD 123, the recording control part 162 determines that the recording of the content media encrypted to the intermediate buffer is completed, and the process goes to Step S88.

In Step S88, as similar to the process in Step S27 shown in Fig. 4 described above, a complete signal is sent from the recording and reproducing apparatus 102 to the recording and reproducing apparatus 101.

In Step S89, the recording and reproducing apparatus 102 records the content media encrypted on the recording medium 131. More specifically, the recording control part 162 reads the content media encrypted out of the HDD 123 through the bus 125, and supplies it to the drive 124. Under control done by the recording control part 162, the drive 124 records the acquired content media encrypted on the recording medium 131.

In Step S90, the recording control part 162 erases the content recorded on the intermediate buffer, that is, the content media encrypted that is recorded on the HDD 123, and then the content receiving process is ended.

Thus, as compared with the first and second embodiments, although the timing at which the complete signal is sent from the recording and reproducing apparatus 102 to the recording and reproducing apparatus 101 is delayed by the amount of transcoding being performed in advance, the processes of the local encryption and decoding of the content can be omitted, and thus the processing time in the recording and reproducing apparatus 102 can be shortened.

In addition, in the case of the third embodiment, the configuration of the recording and reproducing apparatus 102 may be the configuration in which the local encoder 115 and the local decoder 116 are omitted.

In addition, in the discussions above, the example of the process is shown in which the recording of the content on the HDD 123 is all finished to transfer the content from the HDD 123 to the recording medium 131. However, the recording of the content on the HDD 123 and the transfer of the content from the HDD 123 to the recording medium 131 may be performed in parallel by pipelining. Also in this case, the complete signal can be sent from the recording and reproducing apparatus 102 to the recording and reproducing apparatus 101 before the transfer of the content to the recording medium 131 is completed, and thus the standby time of the recording and reproducing apparatus 101 can be shortened.

In addition, the system in which the recording and reproducing apparatus 102 uses unique information about the recording medium 131 to local encrypt or media encrypt the content is not restricted to a specific scheme. Such a scheme is sufficient that the content may not decoded unless otherwise unique information about the recording medium 131 can be obtained. Moreover, as described above, such a scheme may be possible that for example, unique information is used as a local cryptographic key or a media cryptographic key as unchanged, not using unique information about the recording medium 131 to generate a local cryptographic key or a media cryptographic key.

In addition, in the discussions above, the example is shown that the content is local encrypted or media encrypted and then the content is recorded on the HDD 123 that is the intermediate buffer. However, for example, in the case in which the content is not necessarily encrypted in particular, such as the case in which it is unnecessary to take the security of a content into account, or the case in which the HDD 123 is tamperproof in such a way that data is destroyed when the HDD 123 is dismounted from the recording and reproducing apparatus 102, the content may be recorded on the HDD 123 with no encryption.

In addition, the embodiments of the invention can be adapted to such a recording apparatus that can record a content on two types or more of recording media with different recording speeds, other than the combination of the HDD 123 and the recording medium 131 described above. For example, in a recording apparatus in which a content can be recorded on two types of recording media, a HDD and a RAM, the final content transfer destination is the HDD, and the RAM having a recording speed higher than the HDD can be used as the intermediate buffer for the content.

Moreover, according to the embodiments of the invention can be adapted to such a recording apparatus that can record a content on two types or more of recording media having basically different recording speeds due to factors other than the recording speed, for example, due to preprocessing necessary before the content is recorded (for example, transcoding, and encryption), which results in different recording time periods for the content.

In addition, it is sufficient that the contents applicable to the embodiments of the invention are contents that can be transferred between devices and converted into data recordable on a recording medium, which are not restricted to a particular type.

Moreover, the communication system for use in the transfer of a content between devices in the embodiments of the invention is not restricted to a particular system, which can be adapted to both of cable communications and wireless communications.

A sequence of the process steps described above may be executed by hardware, or may be executed by software. In the case in which a series of the process steps is executed by software, a program configuring the software is installed in a computer incorporated in a dedicated hardware, or is installed from a program recording medium to a multi-purpose personal computer, for example, that can run various functions by installing various programs.

In addition, in the specification, the steps describing the program to be stored in the program recording medium of course include the process steps performed in time series along the described order and also include the process steps performed individually or in parallel not necessarily processed in time series.

Moreover, the embodiment of the invention is not limited to the embodiments described above, which can be modified within the scope not deviating from the teaching of an embodiment of the invention.

It should be understood by those skilled in the art that various modifications, combinations, sub-combinations and alterations may occur depending on design requirements and other factors insofar as they are within the scope of the appended claims or the equivalents thereof.

## Claims

1. A recording and reproducing apparatus (102) configured as a personal video recorder (PVR) that can record a content on a first recording medium (123), and on a second recording medium (131) taking longer time to record a content than the first recording medium (123) does, the recording and reproducing apparatus (102) comprising:
a recording control means (162) for controlling recording of a transferred content such a way that when the transferred content that is a content sent from another device (101) is recorded on the second recording medium (131), the transferred content is recorded on the first recording medium (123) prior to the second recording medium (131) and the transferred content recorded on the first recording medium (123) is recorded on the second recording medium (131);
**characterized in that** the recording and reproducing apparatus (102) further comprises
a notifying means (161) for notifying the another device (101) that reception of the transferred content is completed at a time when the recording of the transferred content on the first recording medium (123) is completed before the recording of the transferred content on the second recording medium (131) is completed, and
an encrypting means (115, 118) for using information unique to the second recording medium (131) to encrypt a content, wherein the recording control means (162) performs control in such a way that information unique to the second recording medium (131) is used to encrypt the transferred content for recording the transferred content on the first recording medium (123).

2. The recording and reproducing apparatus (102) according to claim 1, wherein the encrypting means (115, 118) encrypts a content in accordance with a system to which the second recording medium (131) conforms.

3. A recording method of a recording and reproducing apparatus (102) configured as a personal video recorder (PVR) that can record a content on a first recording medium (123), and on a second recording medium (131) taking longer time to record a content than the first recording medium (123) does, the method comprising the steps of:
controlling recording of a transferred content such a way that when the transferred content that is a content sent from another device (101) is recorded on the second recording medium (131), the transferred content is recorded on the first recording medium (123) prior to the second recording medium (131) and the transferred content recorded on the first recording medium (123) is recorded on the second recording medium (131);
**characterized in that** the recording method further comprises the steps of
notifying the another device (101) that reception of the transferred content is completed at a time when the recording of the transferred content on the first recording medium (123) is completed before the recording of the transferred content on the second recording medium (131) is completed; and
encrypting a content wherein control is performed in such a way that information unique to the second recording medium (131) is used to encrypt the transferred content for recording the transferred content on the first recording medium (123).

4. A program that allows a computer to perform a process, the computer of a recording and reproducing apparatus (102) configured as a personal video recorder (PVR) that can record a content on a first recording medium (123), and on a second recording medium (131) taking longer time to record a content than the first recording medium (123) does, the program comprising the steps of:
controlling recording of a transferred content such a way that when the transferred content that is a content sent from another device (101) is recorded on the second recording medium (131), the transferred content is recorded on the first recording medium (123) prior to the second recording medium (131) and the transferred content recorded on the first recording medium (123) is recorded on the second recording medium (131);
**characterized in that** the progam further comprises the steps of
notifying the another device (101) that reception of the transferred content is completed at a time when the recording of the transferred content on the first recording medium (123) is completed before the recording of the transferred content on the second recording medium (131) is completed, and
encrypting a content wherein control is performed in such a way that information unique to the second recording medium (131) is used to encrypt the transferred content for recording the transferred content on the first recording medium (123).

## Patentansprüche

1. Aufzeichnungs- und Wiedergabevorrichtung (102), die als ein persönlicher Videorekorder (PVR) ausgelegt ist, der einen Inhalt auf einem ersten Aufzeichnungsmedium (123) und auf einem zweiten Aufzeichnungsmedium (131), das eine längere Zeit zum Aufzeichnen eines Inhalts als das erste Aufzeichnungsmedium (123) benötigt, aufzeichnen kann, wobei die Aufzeichnungs- und Wiedergabevorrichtung (102) umfasst
eine Aufzeichnungs-Steuereinrichtung (162) zum Steuern der Aufzeichnung eines übertragenen Inhalts dermaßen, dass wenn der übertragene Inhalt, der ein von einer anderen Vorrichtung (101) gesendeter Inhalt ist, auf dem zweiten Aufzeichnungsmedium (131) aufgezeichnet wird, der übertragene Inhalt vor dem zweiten Aufzeichnungsmedium (131) auf dem ersten Aufzeichnungsmedium (123) aufgezeichnet wird und der übertragene auf dem ersten Aufzeichnungsmedium (123) aufgezeichnete Inhalt auf dem zweitem Aufzeichnungsmedium (131) aufgezeichnet wird;
**dadurch gekennzeichnet, dass** die Aufzeichnungs- und Wiedergabevorrichtung (102) ferner umfasst
eine Benachrichtigungseinrichtung (161) zum Benachrichtigen der anderen Vorrichtung (101), dass ein Empfang des übertragenen Inhalts zu einer Zeit abgeschlossen ist, wenn das Aufzeichnen des übertragenen Inhalts auf dem ersten Aufzeichnungsmedium (123) abgeschlossen ist, bevor das Aufzeichnen des übertragenen Inhalts auf dem zweiten Aufzeichnungsmedium (131) abgeschlossen ist, und
eine Verschlüsselungseinrichtung (115, 118) zum Benutzten von Information, die dem zweiten Aufzeichnungsmedium (131) einzigartig ist, um einen Inhalt zu verschlüsseln, wobei die Aufzeichnungs-Steuereinrichtung (162) eine Steuerung dermaßen ausführt, dass die dem zweiten Aufzeichnungsmedium (131) einzigartige Information benutzt wird, um den übertragenen Inhalt für das Aufzeichnen des übertragenen Inhalts auf dem ersten Aufzeichnungsmedium (123) zu verschlüsseln.

2. Aufzeichnungs- und Wiedergabevorrichtung (102) gemäß Anspruch 1, wobei die Verschlüsselungseinrichtung (115, 118) einen Inhalt entsprechend einem System verschlüsselt, dem das zweite Aufzeichnungsmedium (131) genügt.

3. Aufzeichnungsverfahren einer Aufzeichnungs- und Wiedergabevorrichtung (102), die als ein persönlicher Videorekorder (PVR) ausgelegt ist, der einen Inhalt auf einem ersten Aufzeichnungsmedium (123) und auf einem zweiten Aufzeichnungsmedium (131), das eine längere Zeit zum Aufzeichnen eines Inhalts als das erste Aufzeichnungsmedium (123) benötigt, aufzeichnen kann, wobei das Verfahren die Schritte umfasst
Steuern der Aufzeichnung eines übertragenen Inhalts dermaßen, dass wenn der übertragene Inhalt, der ein von einer anderen Vorrichtung (101) gesendeter Inhalt ist, auf dem zweiten Aufzeichnungsmedium (131) aufgezeichnet wird, der übertragene Inhalt vor dem zweiten Aufzeichnungsmedium (131) auf dem ersten Aufzeichnungsmedium (123) aufgezeichnet wird und der übertragene auf dem ersten Aufzeichnungsmedium (123) aufgezeichnete Inhalt auf dem zweiten Aufzeichnungsmedium (131) aufgezeichnet wird;
**dadurch gekennzeichnet, dass** das Aufzeichnungsverfahren ferner die Schritte umfasst
Benachrichtigen der anderen Vorrichtung (101), dass ein Empfang des übertragenen Inhalts zu einer Zeit abgeschlossen ist, wenn das Aufzeichnen des übertragenen Inhalts auf dem ersten Aufzeichnungsmedium (123) abgeschlossen ist, bevor das Aufzeichnen des übertragenen Inhalts auf dem zweiten Aufzeichnungsmedium (131) abgeschlossen ist, und
Verschlüsseln eines Inhalts, wobei eine Steuerung dermaßen ausgeführt wird, dass Information, die dem zweiten Aufzeichnungsmedium (131) einzigartig ist, verwendet wird, um den übertragenen Inhalt zum Aufzeichnen des übertragenen Inhalts auf dem ersten Aufzeichnungsmedium (123) zu verschlüsseln.

4. Programm, das einem Computer erlaubt ein Verfahren auszuführen, wobei der Computer von einer Aufzeichnungs- und Wiedergabevorrichtung (102) ist, die als ein persönlicher Videorekorder (PVR) ausgelegt ist, der einen Inhalt auf einem ersten Aufzeichnungsmedium (123) und auf einem zweiten Aufzeichnungsmedium (131), das eine längere Zeit zum Aufzeichnen eines Inhalts als das erste Aufzeichnungsmedium (123) benötigt, aufzeichnen kann, wobei das Programm die Schritte umfasst
Steuern der Aufzeichnung eines übertragenen Inhalts dermaßen, dass wenn der übertragene Inhalt, der ein von einer anderen Vorrichtung (101) gesendeter Inhalt ist, auf dem zweiten Aufzeichnungsmedium (131) aufgezeichnet wird, der übertragene Inhalt vor dem zweiten Aufzeichnungsmedium (131) auf dem ersten Aufzeichnungsmedium (123) aufgezeichnet wird und der übertragene auf dem ersten Aufzeichnungsmedium (123) aufgezeichnete Inhalt auf dem zweiten Aufzeichnungsmedium (131) aufgezeichnet wird;
**dadurch gekennzeichnet, dass** das Aufzeichnungsverfahren ferner die Schritte umfasst
Benachrichtigen der anderen Vorrichtung (101), dass ein Empfang des übertragenen Inhalts zu einer Zeit abgeschlossen ist, wenn das Aufzeichnen des übertragenen Inhalts auf dem ersten Aufzeichnungsmedium (123) abgeschlossen ist, bevor das Aufzeichnen des übertragenen Inhalts auf dem zweiten Aufzeichnungsmedium (131) abgeschlossen ist, und
Verschlüsseln eines Inhalts, wobei eine Steuerung dermaßen ausgeführt wird, dass Information, die dem zweiten Aufzeichnungsmedium (131) einzigartig ist, verwendet wird, um den übertragenen Inhalt zum Aufzeichnen des übertragenen Inhalts auf dem ersten Aufzeichnungsmedium (123) zu verschlüsseln.

## Revendications

1. Appareil (102) d'enregistrement et de reproduction constitué comme un enregistreur vidéo personnel (PVR pour "Personal Video Recorder") qui peut enregistrer un contenu sur un premier support (123) d'enregistrement, et sur un second support (131) d'enregistrement prenant un temps plus long pour enregistrer un contenu que ne le fait le premier support (123) d'enregistrement, l'appareil (102) d'enregistrement et de reproduction comprenant :
un moyen (162) de commande d'enregistrement destiné à commander l'enregistrement d'un contenu transféré de telle façon que lorsque le contenu transféré qui est un contenu envoyé depuis un autre dispositif (101) est enregistré sur le second support (131) d'enregistrement, le contenu transféré est enregistré sur le premier support (123) d'enregistrement avant le second support (131) d'enregistrement et le contenu transféré enregistré sur le premier support (123) d'enregistrement est enregistré sur le second support (131) d'enregistrement ;
**caractérisé en ce que** l'appareil (102) d'enregistrement et de reproduction comprend en outre :
un moyen (161) de notification destiné à notifier à l'autre dispositif (101) que la réception du contenu transféré est achevée au moment où l'enregistrement du contenu transféré sur le premier support (123) d'enregistrement est achevé avant que soit achevé l'enregistrement du contenu transféré sur le second support (131) d'enregistrement ; et
un moyen (115, 118) de cryptage destiné à utiliser de l'information propre au second support (131) d'enregistrement pour crypter un contenu, dans lequel le moyen (162) de commande d'enregistrement effectue la commande de telle façon que l'information propre au second support (131) d'enregistrement soit utilisée pour crypter le contenu transféré pour enregistrer le contenu transféré sur le premier support (123) d'enregistrement.

2. Appareil (102) d'enregistrement et de reproduction selon la revendication 1, dans lequel le moyen (115, 118) de cryptage crypte un contenu selon un système auquel le second support (131) d'enregistrement est conforme.

3. Procédé d'enregistrement d'un appareil (102) d'enregistrement et de reproduction constitué comme un enregistreur vidéo personnel (PVR) qui peut enregistrer un contenu sur un premier support (123) d'enregistrement, et sur un second support (131) d'enregistrement prenant un temps plus long pour enregistrer un contenu que ne le fait le premier support (123) d'enregistrement, le procédé comprenant les étapes :
de commande de l'enregistrement d'un contenu transféré de telle façon que lorsque le contenu transféré qui est un contenu envoyé depuis un autre dispositif (101) est enregistré sur le second support (131) d'enregistrement, le contenu transféré est enregistré sur le premier support (123) d'enregistrement avant le second support (131) d'enregistrement et le contenu transféré enregistré sur le premier support (123) d'enregistrement est enregistré sur le second support (131) d'enregistrement ;
**caractérisé en ce que** le procédé d'enregistrement comprend en outre les étapes :
de notification à l'autre dispositif (101) que la réception du contenu transféré est achevée au moment où l'enregistrement du contenu transféré sur le premier support (123) d'enregistrement est achevé avant que soit achevé l'enregistrement du contenu transféré sur le second support (131) d'enregistrement ; et
de cryptage d'un contenu, dans lequel la commande se fait de telle façon que de l'information propre au second support (131) d'enregistrement soit utilisée pour crypter le contenu transféré pour enregistrer le contenu transféré sur le premier support (123) d'enregistrement.

4. Programme qui permet à un processeur d'effectuer un traitement, le processeur d'un appareil (102) d'enregistrement et de reproduction constitué comme un enregistreur vidéo personnel (PVR) qui peut enregistrer un contenu sur un premier support (123) d'enregistrement, et sur un second support (131) d'enregistrement prenant un temps plus long pour enregistrer un contenu que ne le fait le premier support (123) d'enregistrement, le programme comprenant les étapes :
de commande de l'enregistrement d'un contenu transféré de telle façon que lorsque le contenu transféré qui est un contenu envoyé depuis un autre dispositif (101) est enregistré sur le second support (131) d'enregistrement, le contenu transféré est enregistré sur le premier support (123) d'enregistrement avant le second support (131) d'enregistrement et le contenu transféré enregistré sur le premier support (123) d'enregistrement est enregistré sur le second support (131) d'enregistrement ;
**caractérisé en ce que** le programme comprend en outre les étapes :
de notification à l'autre dispositif (101) que la réception du contenu transféré est achevée au moment où l'enregistrement du contenu transféré sur le premier support (123) d'enregistrement est achevé avant que soit achevé l'enregistrement du contenu transféré sur le second support (131) d'enregistrement ; et
de cryptage d'un contenu, dans lequel la commande se fait de telle façon que de l'information propre au second support (131) d'enregistrement soit utilisée pour crypter le contenu transféré pour enregistrer le contenu transféré sur le premier support (123) d'enregistrement.
